# EUROPEAN PATENT SPECIFICATION

(11) **EP 1 854 748 B1**
(45) Date of publication and mention of the grant of the patent: **12.09.2012**
(21) Application number: 07112958.9
(22) Date of filing: 15.09.2003
(51) Int. Cl.: B65G 17/32, B65G 17/46, B65B 3/00, B65B 31/08, B65B 55/02, A61J 1/00

(54) **Station and conveyor system for performing an operation on an article in a flow of purified air**
Station und Transportsystem zur Behandlung eines Artikels in einem Reinluftstrom
Station et conveyeur pour traiter un article dans un flux d'air purifié

(30) Priority: 17.09.2002 GB 0221510; 17.09.2002 GB 0221511
(43) Date of publication of application: 14.11.2007
(62) Divisional of application: 03748048.0
(73) Proprietor: Aseptic Technologies S.A., 5032 Les Isnes (BE)
(72) Inventor: Thilly, Jacques, 1330 Rixensart (BE); Vandecasserie, Christian, 1330 Rixensart (BE)
(74) Representative: Luys, Marie-José A.H.

(56) References cited:
- EP-A- 0 096 336
- EP-A- 0 213 690
- WO-A-02/064439
- DE-A1- 19 916 662
- US-A- 2 503 147
- US-A- 3 092 237
- US-A- 3 881 763
- US-A- 5 558 200
- US-A- 6 098 676
- US-B1- 6 360 794

## Description

This invention relates to a conveyor system, particularly to a conveyor system for conveying pharmaceutical vials, especially for conveying such vials past one or more processing station at which one or more operation such as filling or sealing may be performed. In particular the invention relates to holding means for securely holding articles onto such a conveyor.

Particularly US 6 098 676 A and EP 0096 336 A are relevant as prior art.

Conveyor systems such as endless belts or chains are well known. In the pharmaceutical industry vials or other articles are commonly transported by a conveyor adjacent to processing stations which comprise apparatus for performing a process, e.g. filling or sealing the vial etc. Often it is necessary to perform such processes on sterile vials and in a sterile environment. A sterile environment is frequently provided by means of a downward laminar flow of purified air. For such purposes in the pharmaceutical industry a conveyor must comply with Good Manufacturing Practice ("GMP") and corresponding FDA requirements. These call for a conveyor system that minimises the possibility of contamination, can easily be cleaned, and can easily be swept by such a laminar flow.

A problem with known laminar flow systems is that often the components of processing stations are often angular in shape and/or have numerous recesses, corners etc. which can cause turbulence in the laminar flow and are not easily swept by such a laminar flow, and sterility can be compromised for example if micro-organisms are able to reside in such recesses etc. Additionally the laminar flow can be disrupted by turbulence as the air flows over the processing station. This can cause the processing station to fail to comply with Good Manufacturing Practice ("GMP").

A particular problem associated with such a laminar flow over a conveyor in a poorly designed system is that sterile air, having flowed past an upstream part of the conveyor or a vial on the conveyor, may "rebound" from a downstream surface and carry contamination upstream. It is also desirable, but a complicating problem, to ensure that as far as possible handling machinery e.g. parts of conveyors is kept downstream of sterile articles to reduce the possibility of contamination. Such a conveyor system must also satisfy the general requirement of holding articles sufficiently securely to enable safe transport of the articles, convenient processing at the processing stations, and easy release when the operations are completed.

A filling and sealing process is disclosed in US-A-5,641,004 and WO-A-02/064439 in which vials are provided with respectively a part of their wall or their closure made of a heat-fusible material which can be punctured by passing a hollow filling needle through the wall or closure, a material introduced into the vial via the needle, the needle withdrawn to leave a small residual puncture hole, and this puncture hole then sealed using a source of heat particularly a laser beam. GB 0219152.6 filed 16 August 2002 and GB 0304268.6 filed 26 February 2003, and the PCT application filed in August 2003 claiming priority from these, the contents of which are incorporated herein by way of reference, disclose vials adapted to such a process, and provided with a ring-shaped stand or carrier (feature 50) having an inner perimeter, an outer perimeter, an upper surface and a lower surface. It is desirable in such a process that the vial is held by a holding means during this process at a place distant from the upper closure of the vial, to avoid interference of the holding means with the filling and heat sealing process.

It is an object of this invention to provide a conveyor system that meets these requirements, in particular aiming to improve the laminar flow of purified air through the system.

According to a first aspect of this invention a processing station for performing an operation on an article in a laminar upstream to downstream direction flow of purified air comprises;
a processing apparatus for performing the operation upon the article,
an aerodynamic shroud around at least part of the apparatus and positioned such that a leading surface of the aerodynamic shroud is upstream of the apparatus.

The processing station is preferably a processing station for performing an operation on a medicament vial or a syringe, particularly a filling and/or sealing operation. The article, or plural articles, is/are preferably mounted on a conveyor system which may be of generally conventional construction. Such a conveyor system is located adjacent to the processing station, preferably located downstream of the processing station relative to the airflow.

The conveyor system is preferably a conveyor system according to the first aspect of this invention, i.e. incorporating the above-described holding means. The processing station is preferably a station for filling and/or heat sealing vials as described above.

Preferably the processing station is located above the conveyor so as to be able to perform the operation on articles below the processing station, e.g. by a downward movement of the processing station, or an upward movement of the article.

The upstream to downstream flow direction of purified air is preferably a downward flow of sterilised air, e.g. sterilised to Class 100 or better. The processing station of the invention is suitable for air flow rates as provided by conventional laminar flow generators. The processing station is therefore preferably located above the conveyor.

In one embodiment the operation may be a filling operation for a medicament container such as a vial e.g. as described above, and the processing apparatus for performing the operation comprises a filling apparatus. For example such a filling apparatus may comprise one or more, preferably five, ten or more, hollow filling needles, each connected, preferably each individually connected, to a source of liquid medicament for example via a flow line connected to the needle by a suitable connector such as a luer lock. Such a source may for example comprise a reservoir of the medicament and a metering pump. In such a filling apparatus if there are multiple filling needles then preferably all of the flow lines are the same length so that uniform flow is achieved along the flow lines and through each needle.

In another embodiment, the operation may be a sealing operation where a puncturable thermoplastic closure closing a vial, after being punctured by passing a hollow filling needle through the closure, introducing a material into the vial via the needle, then withdrawing the needle leave a small residual puncture hole in the closure, has the residual puncture hole sealed using a source of heat. The processing apparatus may comprise a heat source e.g. a source of intense light which may be directed onto the region of the residual puncture hole to fuse the material of the puncture hole around the hole. The light may be laser light, for example directed by one or more optical fibre conveying such light. Such a processing station preferably also comprises a thermal sensor to monitor the temperature reached by a surface onto which such light is directed and optionally an extraction manifold to remove fumes emitted by the surface in response to the heat generated by the intense light directed thereon.

In such a processing station the intense light may be directed at the residual puncture hole of the stopper and the thermal user may detect and measure the consequent elevated temperature of the site where the light is directed. Monitoring and control equipment connected to the processing station may confirm that an elevated temperature sufficient to fuse the closure material in the vicinity of the puncture hole has been achieved.

The aerodynamic shroud surrounds and encloses at least part of the processing apparatus and has a leading surface e.g. a leading edge, upstream of the processing apparatus in the airflow. This arrangement can ensure that smooth undisrupted laminar flow of the purified air is maintained over the apparatus, other parts of the processing station and over equipment such as a conveyor line downstream of the shroud. The aerodynamic shroud preferably has a smooth outer surface, as far as feasible without recesses, corners etc in which microorganisms can collect. Part(s) of the processing apparatus at the downstream (e.g. lower) end of the aerodynamic shroud may be exposed to enable interaction thereof with the article upon which the processing station is to operate. Such part(s) may extend beyond a trailing, downstream end e.g. a trailing edge, through which the processing apparatus may be accessed.

Typically as cut along its longitudinal, i.e. upstream-downstream direction, the shroud has a generally aerofoil cross section, e.g. an elongated elliptical section or an elongated pear-shaped section. Such a section may be an elongated pear-shape with the leading edge of the section, being the wide end of pear-shape, upstream e.g. uppermost. A preferred cross section has opposite parallel longitudinally aligned sides with a pointed arched upstream end and downstream end. The longitudinal section is preferably symmetrical as there is no need for the aerodynamic shape to generate lift, but it is desirable to minimise disturbance of the laminar flow.

Preferably the aerodynamic shroud is adapted to enclose plural processing apparatus, for example plural filling apparatus or sealing apparatus. For example plural units of processing apparatus may be arranged in a straight line row, for example to perform the process on articles, such as vials arranged in a corresponding row adjacent to, e.g. below the processing apparatus and into an operating relationship with which the processing apparatus can be moved, preferably in a direction parallel to the airflow. To surround such a row the aerodynamic shroud may extend linearly along the row so that a cross section through the shroud cut across the row has the above-mentioned cross section. The overall shape of such a shroud may therefore be generally similar to an aircraft wing, with its leading edge uppermost in the downward laminar flow, and its trailing edge downwards.

In a preferred construction of the shroud, the shroud comprises two part-shrouds, elongated in a direction perpendicular to the direction of the laminar flow and to the plane of the cross section, having the above-mentioned cross section across this longitudinal direction, and hinged together at their respective leading edges to rotate about a hinge axis parallel to the elongate direction. The elongate direction is preferably the direction of a row of processing apparatus units contained therein. Preferably such part shrouds hinge such that the respective trailing edges become adjacent, preferably meet, most preferably locking together. The part shrouds may be so hinged by their respective leading edges being made in a part-hollow cylindrical shape, the internal diameter of a first part shell corresponding to the external diameter of the second, so that the part-cylindrical shapes can overlap and smoothly rotate relative to each other. Locking together of the trailing edge may for example be by means of a snap fit, friction fit or interlocking fit etc of the trailing edges of these part-shrouds. Preferably such two part-shrouds may also be supported by, and optionally at least one part shroud may be hinged to, a support rail at the leading edge, for example in the above-described construction a cylindrical support rail corresponding in radius to the radius of the internal radius of the first part shroud. The hinging together of the two part-shrouds enables the construction of the shroud as a hollow shell with the part-shrouds comprising part-shells, e.g. a so called "clamshell".

The construction of the shroud as a hollow shell able to be opened at its trailing edge by the hinging of the two part-shrouds of the trailing edge facilitates the provision of one or more internal supports on one or more inner surfaces of one or both part-shroud for the processing apparatus.

For example a part-shroud may have one or more supports on its inner surface to hold the processing apparatus. If there are plural processing apparatus units, e.g. plural filling needles and their associated connectors such as luer locks, then each part-shroud may have holders for a part, e.g. half, of the total number of apparatus. For example along the linear direction of a row of plural apparatus units the individual apparatus units may be held by the two part-shrouds in a staggered arrangement in the elongate direction, and the arrangement of supports in each part shroud may be staggered to provide this. An analogous construction may be used for a processing station which is a sealing station as mentioned above.

A hollow construction of the shroud also allows the hollow interior to contain other parts of the processing apparatus, for example supply conduits for the medicament etc., one or more light guide such as an optical fibre to direct intense light e.g. laser light, one or more thermal sensor, fume conduits leading from exhaust manifolds etc. The internal space within such a hollow shroud may contain the optical fibre(s) and/or electrical cabling for such devices as the thermal sensors, or other components of a processing station to enable them to be connected to ancillary equipment such as control equipment etc. By enabling parts such as supply conduits, electrical cables etc to be contained within the hollow shroud, the hollow construction also reduces the risk of accidental damage to these parts, or their catching on other parts of the processing station or of an overall machine with which it operates. Normally the interior of such a hollow shroud will be sterilised prior to use. The hollow shroud can also be made substantially airtight to prevent any entry or exit of contamination.

The shroud may be made of materials suitable for a GMP standard device, such as stainless steel. Such a material is relatively robust but if necessary internal supports or reinforcement may be provided such as one or more internal beam, e.g. in the linear direction.

The invention also provides a system for performing a process on an article comprising:
a conveyor to convey plural articles in a conveying direction,
a means to provide a laminar flow of air in an upstream-toward-downstream direction toward the conveyor,
a processing apparatus for performing the operation upon the article,
an aerodynamic shroud around at least part of the apparatus and positioned such that a leading surface of the aerodynamic shroud is upstream of the apparatus,
the processing apparatus being upstream of the conveyor in the laminar flow of air.

The processing station with its shroud may be mounted for use adjacent to, preferably above, the conveyor line for conveying articles such as vials or syringes in a conveyor direction, e.g. the conveyor system described above. Suitably the conveyor may transport the articles arranged in rows aligned across the conveyor direction, and the linear direction of the preferred shroud may preferably be perpendicularly across the conveying direction. A processing station comprising a shroud elongated in the linear direction of a row of articles may conveniently be supported at or adjacent its linear ends e.g. on vertically extending supports, and drive means may be provided to move the processing station up and down to perform the operation when the articles are suitably positioned below the processing station. The processing station may be capable of movement only in the up-down direction and the conveyor may for example be temporarily and/or locally stopped during the performance of the operation. Alternatively or additionally the processing station may be movable about a path and at a speed such that on part of the path the processing station moves in parallel with articles on the conveyor in the conveying direction and at the same speed, so that there is zero relative velocity between the station and the article(s). Such a path suitably includes a return path for the station in the opposite direction to the conveying direction.

Preferred features of the processing apparatus and shroud are as above.

The present invention also provides a process for performing an operation on an article using a processing station as described above.

A preferred process comprises puncturing a closure of a vial, made of a heat-fusible puncturable material by passing a hollow filling needle comprising part of the processing station through the closure, introducing a material preferably a medicament into the vial via the needle, then withdrawing the needle to leave a small residual puncture hole in the closure.

Another preferred process comprises sealing a puncture hole in a thermoplastic closure of a vial using a source of intense light comprising part of the processing station.

Optionally the temperature of the region of the closure upon which the light is directed may be monitored using a thermal sensor comprising part of the processing station, and optionally fumes may be removed from this region using a fume extraction manifold comprising part of the processing station. In this process the processing station and adjacent parts of an overall device for performing the process are preferably maintained in a sterile environment in which a laminar flow of purified air is directed downward over the processing station.

The conveyor of the first aspect of the invention or as used with the aerodynamic shroud of the second aspect of the invention may be otherwise conventional, for example comprising means to move the holding means of the invention in a closed track with an upper horizontal section of the track moving in the conveying direction, a lower horizontal section of the track moving in the opposite direction, and vertical return sections of the track at the ends of these horizontal sections. The return sections may be conventionally provided by movement of the track around a return wheel at each end of the horizontal sections, or may be conventionally provided by lift sections at each end of the horizontal sections, the latter being preferred for compactness.

Parts of the conveyor system, i.e. the above described holding means and its components, should be made of materials suitable to comply with the requirements of GMP, for example stainless steel, and should be made to a design that minimises corners, crevices, cavities etc. in which might contamination might accumulate and which might disrupt a downward laminar flow of purified air around the conveyor system, such a flow being a commonly used means of ensuring sterility.

The invention will now be described by way of example only with reference to the following drawings.
Fig. 1 shows a perspective view of a base.
Fig. 2 shows a perspective view of a grip part.
Fig. 3 shows a perspective view of an alternative construction of grip part.
Fig. 4 shows a sectional view of a grip part engaged with a base.
Fig. 5 shows the operation of the holding means to hold a vial.
Fig. 6 shows a conveyor system incorporating the holding means of Figs. 1-5.
Fig. 7 shows the loading means of the conveyor of Fig. 6 in more detail
Fig. 8 shows an alternative conveyor system incorporating the holding means of Figs. 1-5.
Fig. 9 shows the sequence of operations as a vial passes processing stations on the conveyor.
Fig. 10 shows a cross section through a shroud and processing apparatus unit of this invention, with the shroud closed
Fig. 11 shows a cross section through the shroud of Fig. 10 with the shroud open
Fig. 12 shows a perspective view from below of the closed shroud and plural units of Fig. 10
Fig. 13 shows a perspective view from above of the open shroud of Fig. 11
Fig. 14 shows a perspective view from below of holders on the inner surface of the shroud of Figs. 10 to 13.
Fig. 15 shows a schematic view from above of a processing station and a row of vials on a conveyor for processing

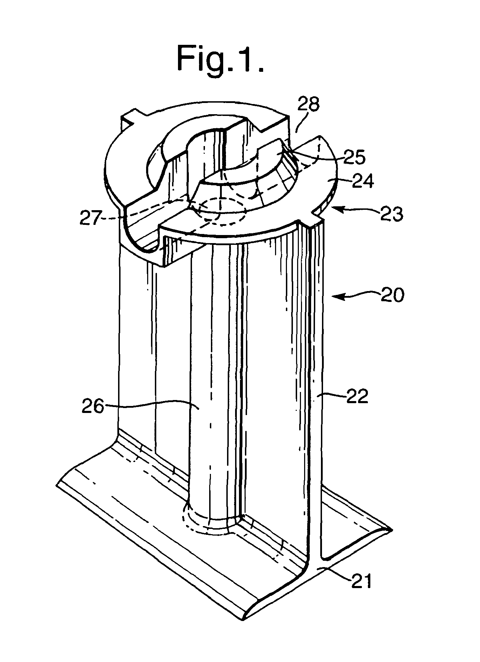

Referring to Figs. 1-9, the following parts are identified.
10 holding means
20 base
21 mounting plate
22 rib
23 upper part
24 flange
25 central convex portion
36 enlarged lower end of the shaft
26 tubular guide
27 upper end of guide
28 receiving cavity
30 grip part
31 shaft
32 grip means
33 grip arms
34 linking bend of the "U"
35 support arm
35A,35B limbs
36 enlargement of shaft
37 gap between grip arms
38 linker
40 pharmaceutical vial
41 closure
42 neck of vial
43 body of vial
44 bottom of vial
45 concave underside of vial
50 carrier (stand)
50A upper surface of carrier
50B lower surface of carrier
51 central aperture
60 conveyor system
61 continuous chains of links
61A upper part of conveyor
61B lower part of conveyor
62 ends of links
63 guide wheel
64, 65 lift sections
70 loader means
71 fork
72 restraint
73 abutment parts
74 slot
80 processing station
81 processing station
90 unloader means
91 jaws of unloader means
100 laminar airflow
101 filling needle
102 medicament contents
103 focussed laser beam

Referring to Figs 1 to 5, a holding means 10 suitable for the conveyor system of this invention is shown, dissembled, assembled and holding a vial 40. The holding means 10 comprises a base 20, and a grip part 30 described in more detail below.

The base 20, made integrally of stainless steel, comprises a mounting plate 21, suitable to engage with a conveyor system (not shown). The plate 21 is shown generalised and it will be understood that various types of known mounting will suit various known types of conveyor system. The plate 21 integrally extends upwardly as a rib 22, strengthening and stabilising the base 20.

The base 20 has an upper part 23, comprising a generally horizontally extending flange 24 with a generally flat upper surface, with a central convex portion 25 of an overall frustro-conical shape.

The grip part 30 is also integrally made of stainless steel and comprises an up-down extending cylindrical shaft 31, having at its upper end a grip means 32 generally. Grip means 32 comprises two grip arms 33 extending parallel to each other in a direction perpendicular to the up-down direction on opposite sides of the up-down axis direction of the shaft 31, so that in plan looking downwards the arms 33 are seen to be of a generally "U" shape linked at 34 being the bend of the "U".

The grip means 32 also includes a support arm 35, integrally connected to the upper end of the shaft 31, extending perpendicular to the shaft 31 and forming generally a "T" shape with the shaft 31, with the two limbs 35A, 35B of the "T" extending in a direction perpendicular to the up-down direction of the shaft 31, and parallel to the arms 33. In the construction shown the support arm 35 is lower down than the arms 33, the link 34 descending to be linked to the extremity of the limb 35A of arm 35 remote from shaft 31 to set a vertical gap between arms 33 and 35. Upper end 31A of the shaft 31 is widened into a wider cylindrical diameter.

The extremities of arms 33 and 35B are roundly profiled to assist the horizontal introduction of an article into the vertical gap between them.

The lower end of the shaft 31 is enlarged at 36, to weight the grip part 30.

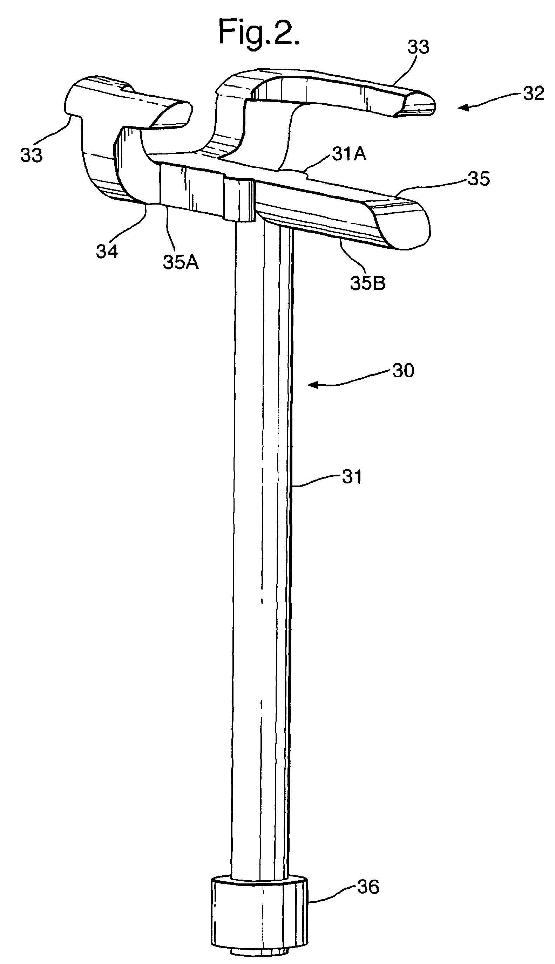

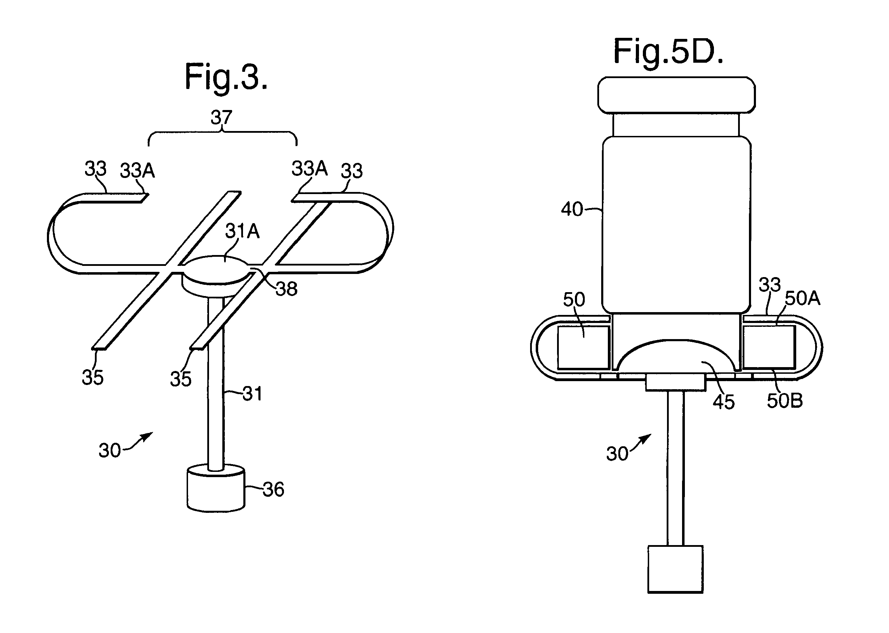

Referring to Fig. 3 an alternative construction of the grip part 30 is shown, parts corresponding to Fig. 2 being numbered correspondingly. In this embodiment two grip arms 33 extend in the transverse direction toward each other with their opposite ends 33A aligned toward each other and defining a gap 37 between them in which an article such as a vial may fit. The two arms 33 extend integrally from the shaft 31 and loop around toward each other to form a generally "C" shaped loop, the bite of the "C" facing upwardly and comprising the gap 37. As will be described in more detail later grip arms 33 are transverse to the direction of conveying motion. The grip part 30 of Fig. 3 also has two support arms 35 lower down on the grip part 30 than the grip arms 33 which can fit underneath an article held by the holding means 10 and support it whilst the grip part 10 is in its upper position. As shown in Fig. 3 the support arm is provided by the two support arms 35 with a linker 37, the combination of arms 35 and linker 38 being of a generally "H" shape as viewed downwardly in plan, the support arms being the uprights of the "H". The grip arms 33 integrally extend from the support arms 35.

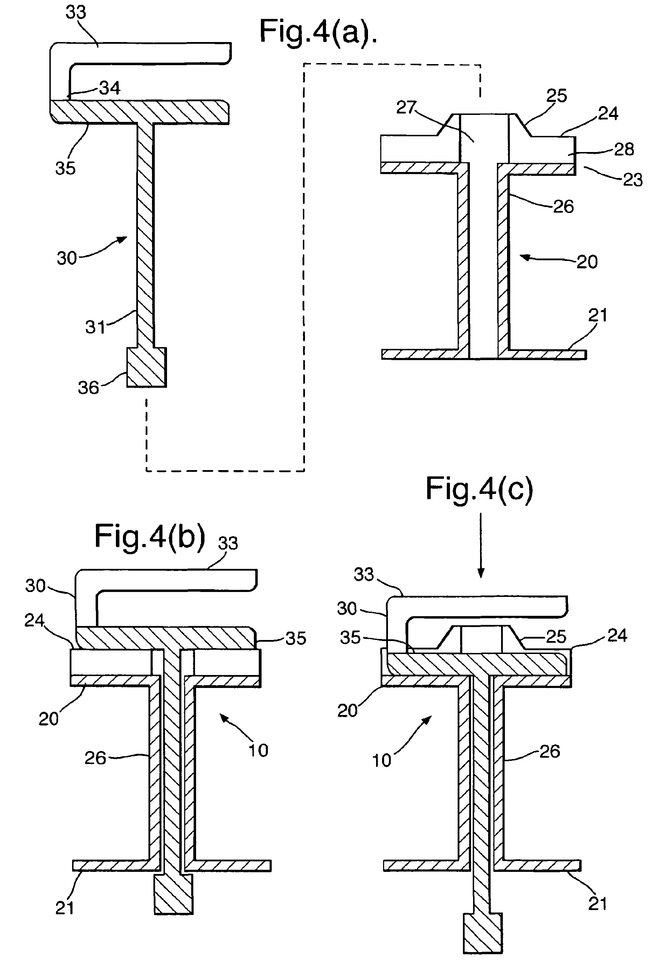

Figs 4A, 4B and 4C are vertical sections through the base 20 and grip part 30 cut along perpendicular planes, Fig. 4A showing the base 20 and grip part 30 separately, Fig. 4A showing the grip part 30 in its upper position, Fig. 4B in its lower position. As seen in Figs. 4A-C, the base 20 has an upwardly extending tubular guide 26 formed integrally with mounting plate 21 and rib 22, having upper and lower open ends, the upper end 27 being visible in Fig. 1. The shaft 31 of grip part 31 fits in a smooth sliding fit within guide 26, the enlarged lower end 36 of shaft 31 being removable, e.g. by a screw thread, to allow the shaft 31 to be inserted therein, and to be retained by the enlargement 36 when the enlargement 36 is re-fitted. The grip part 30 is slideably moveable relative to the base 20 between an upper position shown in Fig 4A, and a lower position as shown in Fig. 4B of the grip part 30.

When the grip part 30 is in its upper position as in Fig 4A, there is a vertical gap between the arms 33 and the upper part 24, 25 of the base 20. The grip part 30 may be held or supported in this position by ancillary means (not shown) such as an abutment part or ramp surface adjacent the lower end 36 of the shaft, and which the lower part 36 may contact e.g. during horizontal movement of he assembly 20 30 during operation of a conveyor system of which the holding means 20, 30 comprises a part.

The upper part 25 of the base 20 has a receiving cavity 28 in the form of a receiving slot extending across the flange 24 and the convex part 25, with its length direction perpendicular to the up-down axis. This receiving cavity 28 receives the support arm 35 when the grip part 30 is in its lower position, as can be seen in Fig. 4B. The shape of the receiving cavity 29 corresponds with that of the support arm 35, having a widened part to receive the cylindrically widened part 31 A of the upper end of shaft 31. The depth of the receiving cavity 28 is greater than the thickness dimension of the support arm 35 so that when the support arm 35 is received in the cavity 28 the upper surface 35A of the support arm 35 is below the upper surface of the part 24 of the base 30, as seen in Fig. 4B.

In its upper position as seen in Fig. 4A the support arm 35 is received in an raised position in receiving cavity 28 i.e. occupying that part of the cavity 28 which cuts through the conical upper part 25, with its upper surface level with the top of the frustro-conical part 25. In its lower position as seen in Fig. 4B the support arm 35 is a lowered position with its upper surface below the level of the upper surface of flange 24.

The grip part 30 shown in Fig. 3 assembles analogously with the base 20.

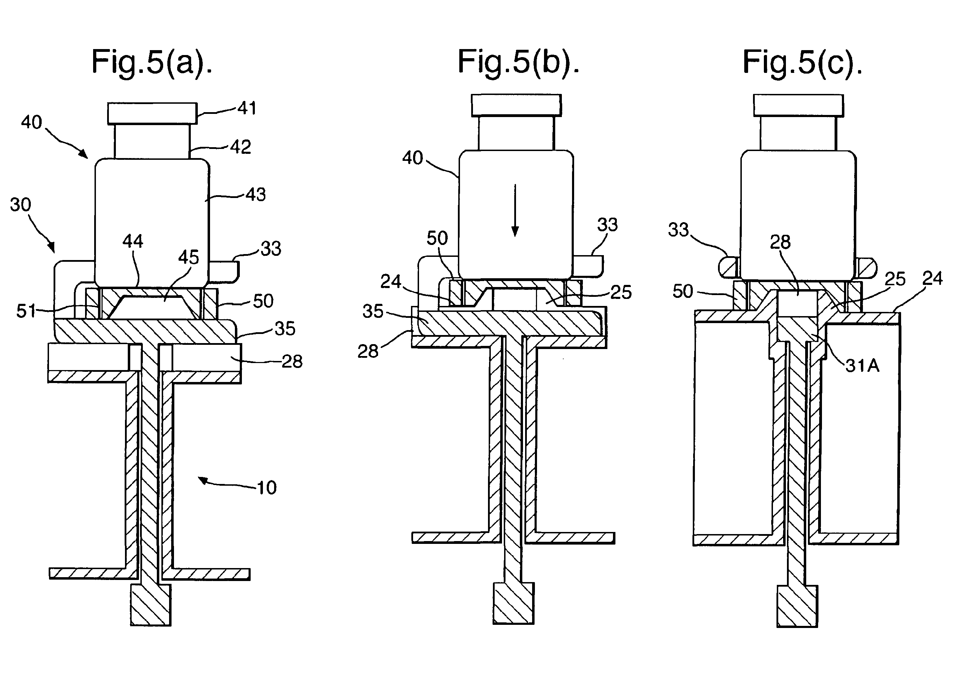

Figs. 5A, 5B and 5B shows more clearly the operation of the holding means 20, 30 in holding a vial 40.

Figs. 5A-C shows a typical pharmaceutical vial 40, having a closure 41, a neck 42, a cylindrical body 43, and a profiled bottom 44. Figs. 5A-C also show a carrier 50 for of the vial 40, comprising a ring of plastics material surrounding a central aperture in which the bottom 44 of the vial 40 sits and is securely held by a friction fit. The bottom 44 of the vial 40 is profiled externally in a downward facing concave frustro-conical shape 45. The flat surface 24 and convex part 25 are shaped to mate with the downward facing correspondingly shaped underside surface 45 of the vial and the carrier 50. In the vial shown in Fig. 5 the diameter of the ring-shaped stand 50 is preferably the same as the diameter of the upper closure 41 of the vial, facilitating the rolling of vials for labelling etc., the diameter of the stand 50 and closure 41 extending beyond the diameter of the body of the vial 40.

The carrier 50, with a vial 40 therein may be moved horizontally from right to left as drawn until the stand 50 abuts against the arms 33, into the position shown in Fig. 5A, with the grip part 30 in its upper position, corresponding to Fig. 3B, so that the vial 40 fits between the arms 33, the carrier 50 fits into the vertical gap between arms 33 and 35, lower rim 53 of the carrier 50 rests on the upper surface of the support arm 35 and the carrier 50 fits into the gap between arms 33 and the upper part 24, 25 of base 20. In this position the downward facing underside 45 of the vial 40 and of carrier 50 is above the part 24, 25 of the base 20. The above mentioned rounded ramped profiling of the extremities of the arms 33 and 35B facilitates the smooth horizontal movement of the carrier 50 between arms 33 and 35. Use of the grip means of Fig. 3 is analogous.

The grip part 30 is now moved into its lower position as seen in Fig. 5B corresponding to Fig 3C. This may be achieved simply by gravity, e.g. by removing any means (not shown) by which the grip part 30 is maintained in its upper position, so that the weight of the grip part 30 biases and pulls the part 30 downward. Alternatively the grip part 30 may be positively urged downwards by a mechanism (not shown).

When the grip part 30 is in the lower position as shown in Fig 5B with the vial 40 and carrier 50 in place, the arms 33 bear on the upper surface of the carrier 50, and the underside 45 of the vial 40 and carrier 50 mate with the upper part 25 of the base 20 so that the carrier 50 is held between the arms 33 and the upper part 25 of the base 20. The holding of the carrier 50 between the arms 33 and the upper part 25 of the base 20 in this way is shown in Fig.5B and 5C. The underside of the base 50 and the bottom 45 of the vial 40 mate securely with the upper parts 24 and 25 of the base 20.

When the support arm 35 is received in the cavity 28 the upper surface 35A of the support arm 35 is below the upper surface of the part 24 of the base 30, as seen in Figs 5B and 5C. This construction enables the grip part 30 to grip the carrier 50 between the grip arms 33 and the base 20, with the underside of the carrier 50 resting on the upper surface of the flange 24, the underside of the carrier 50 no longer resting on the arm 33.

A holding means having the grip part shown in Fig. 3 operates analogously to that of Figs. 5A-C, as shown in Fig. 5D. With the grip means 30 assembled with its base 20 and the grip means 30 in its upper position, a vial 40 mounted in its stand 50 is moved in the direction of the arrow shown in Fig. 3 into the gap 36 so that the upper surface 50A of stand 50 is positioned underneath the two grip arms 33, with the lower surface 50B of the stand 50 resting on the support arms 35. The grip means 30 is then moved downwardly into its lower position analogous to Figs. 4B and 4C, so that the part 31A of the grip means 30 recedes into receiving cavity 28 (being appropriately shaped to receive the part 31A of the grip part 30 of Fig. 3) so that the stand 50 is gripped between the base 20 and the grip arms 33, and the central convex portion 25 of the base 20 mates against the concave bottom 45 of vial 40. Raising the grip part 30 releases the vial 40 so it may be removed from the holding means, e.g. by another movement in the direction of the arrow.

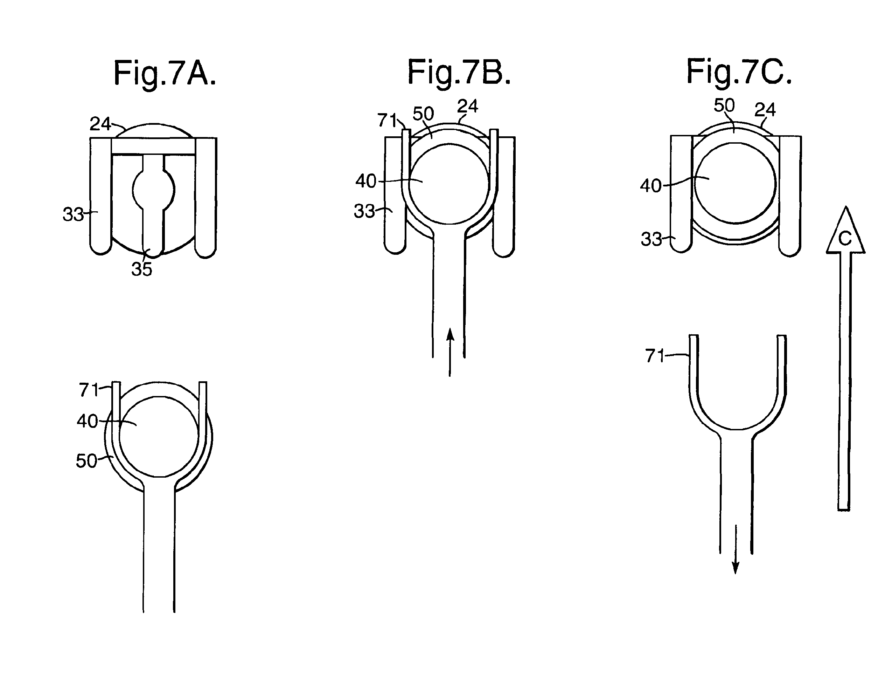

Referring to Figs. 6, 7 and 8, Figs. 6 and 8 show the overall arrangement of a conveyor system in a schematic side view. Fig. 7 shows a plan view of the loading system. The conveying direction is indicated by the arrow.

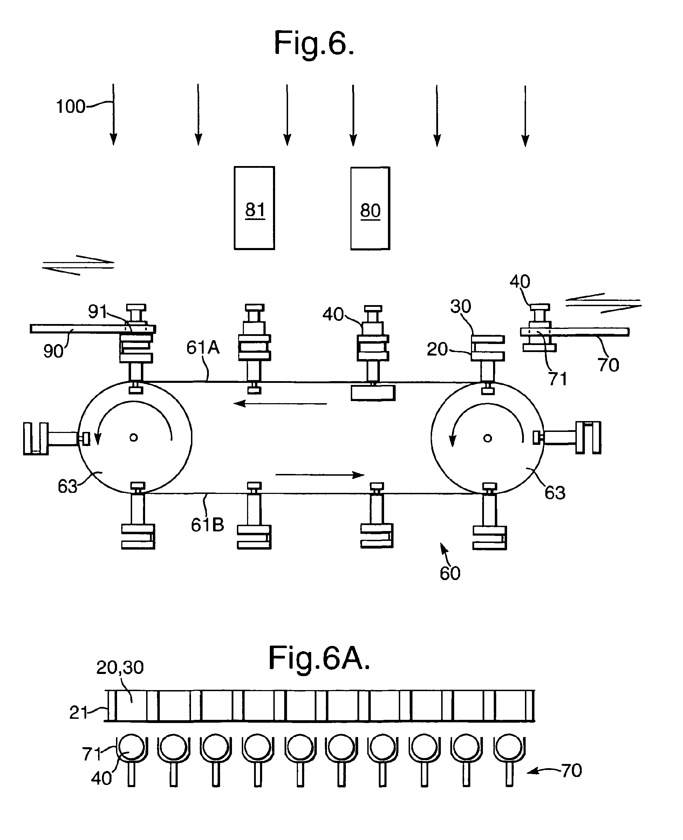

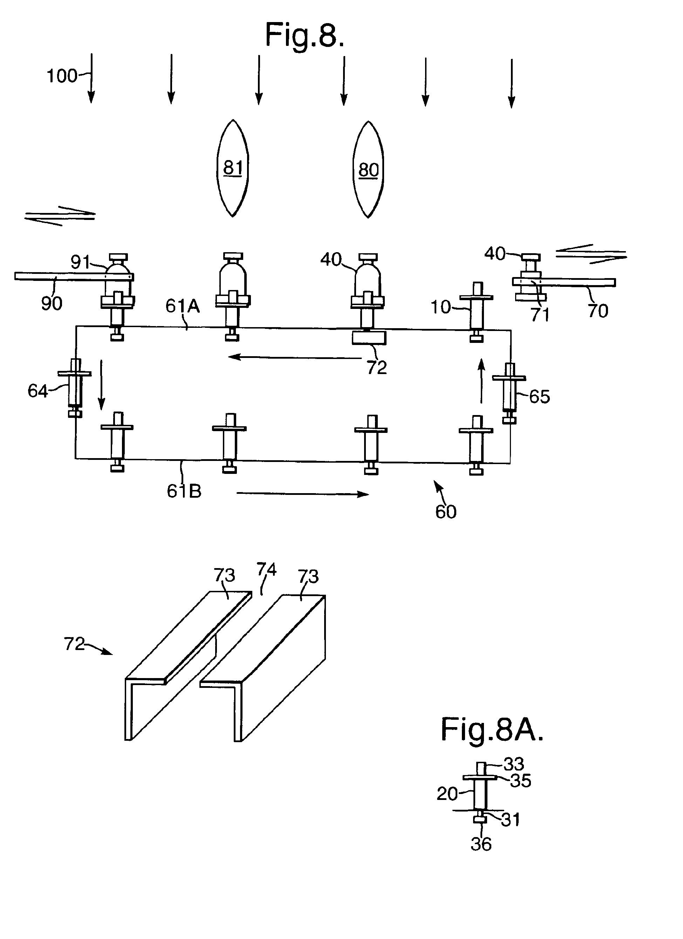

In Fig. 6 the holding means 10 are of the type shown in Figs. 2, 4 and 5A-C but it will be immediately understood that holding means of the type shown in Figs. 3 and 5D may equally well be used, having the advantage that vials 40 may be loaded and unloaded from the conveyor by a movement of the vial in the same direction, i.e. from right to left as seen in Figs. 6 and 8.

As seen in Figs. 6 and 8 the conveyor system 60 is of generally conventional construction, and comprises a pair (only one is part shown in Fig. 6) of continuous chains of links 61, pivotally connected together at ends 62 of the links 61, the chains being arranged to move in parallel. The chain of links 61 moves such that an upper section 61 A of each chain of links 61 moves in the conveying direction shown by the arrow, whilst the opposite lower section 61B of each chain of links 61 moves in the opposite return direction. Fig. 8A shows more detail of the holding means and the vials.

As seen in Fig. 6 at each end the chain of links 61 is supported in a conventional manner by a guide wheel 63 (not shown in Fig. 6), mounted for rotation about a rotation axis perpendicular to the conveying direction. One or more guide wheel 62 may be motor driven to thereby drive the conveyor system in the directions referred to, and the chain of links 61 may be supported by other support means, e.g. support wheels etc. (not shown) in a generally conventional manner. As seen in Fig. 8 an alternative construction of conveyor 60 is shown with parts corresponding to Fig. 6 numbered correspondingly. However instead of the wheels 63 the conveyor of Fig. 8 has lift sections 64, 65 at each end to respectively lower the holding means 10 at the downstream end, and to raise them at the upstream end. Fig. 8 also shows the use of holding means 10 as shown in Figs. 3 and 5D. Fig. 8 also shows a part 72 being a means to restrain the grip part 30 from upward movement under an upward force of a needle, comprising two abutment parts 73 being the sides of a slot 74. During operation of the conveyor the shaft 31 of the grip part enters and slides along the slot 74. Under an upward force the enlarged part 36 of the shaft abuts against the sides 73 to restrain upward movement.

Plural holding means 20,30 are mounted on the conveyor 60 by means of their mounting plates 21, by a conventional mounting (not shown). Each holding means 20,30 is mounted so that its up-down direction extends perpendicular to the conveying direction of the upper part of the chain 60. The plural holding means 20,30 are arranged in plural rows perpendicularly across the conveying direction.

The grip means 33 of the grip part of each of the holding means 20,30 comprises a pair of grip arms forming a "U" shaped arrangement as described above, and as is seen in Fig. 6 the limbs 33 of each "U" and hence the open bite of the "U" point in the opposite direction to the conveying direction. Also the support arm 35 of each grip part 30, and hence the receiving slot 28 of each base 20, is aligned parallel to the conveying direction. The grip means shown in Fig. 3 may be used analogously, with the support arms 35 aligned in the conveying direction.

The conveyor system 60 also comprises a loader means 70 (generally) adjacent to the conveyor 60 and arranged to load articles, being vials 40 mounted in carriers 50, into the holding means 20,30. The loader means 70 is shown in more detail in Fig. 7. Fig. 7 shows a plan view of a single loader element 70, looking downwardly relative to Figs. 6 and 8, with the conveying direction indicated by a arrow "C". In the conveyors of Figs. 6 and 8 plural loader elements are used, one corresponding to each of the vials 40 making up the row across the conveyor 60. Fig. 6A shows in plan view the overal arrangement of the plural elements 70 across the row. In Fig. 7 the alignment of the row of vials 40 is left-right across the page.

The loader means 70 comprises a fork 71 with its jaws able to fit around and grip a vial 40. The bite of each set of jaws of fork 71 faces in the conveying direction. Each loader means 70 is reciprocally moveable in and opposite to the conveying direction either individually or together with all the loader means 70. Operation of the loader means 70 is shown sequentially in Figs. 7A-7C. In Fig. 7A a vial 40 is shown in plan view loosely gripped between the jaws of fork 71. For example the vials 40 may hang in the jaws of forks 71 with the underside of their closures 41 resting on the upper surface of forks 71. The conveyor means 60 is constructed so that as the holding means 20, 30 mounted thereon adopt a vertical configuration the grip part 30 is moved (e.g. by contact with a ramp surface (not shown)) into its upper position. The loader means 70 and conveyor 60 are configured so that immediately the holding means 20, 30 have adopted this vertical position the fork 71 carries the vial 40 in the conveying direction into a position relative to the holding means 20, 30 such that the underside of the vial 40 and carrier 50 is resting on the support arm 35 and is above the upper part of the base 20, the vial 40 is between the arms 33 i.e. in the bite of the "U" or in the gap 36 between the arms 33 of the grip means of Fig. 3, and the upper surface of the carrier 50 is below the grip arms 33. This is shown in Fig. 7B. The movement of the loader means 70 in the conveying direction between the retracted position shown in Fig. 7A and the forward position shown in Fig. 7B is arranged to be such that there is zero relative velocity between the means 70 and the holding means 20,30 when the vial 40 and carrier 50 are in this position.

The grip part 30 can now move into its lower position to grip the article as described above.

The grip of the fork jaws 71 is sufficiently light that as the grip part 30 moves downward to grip the vial carrier 50 the vial 40 can move downward in the grip of the fork jaws 71. Alternatively the loader means 70 itself may be arranged to move downwardly whilst holding the vial 40, and/or to release the vial in another manner e.g. by a positive release of the grip. The holding means 20,30 and the loader means 70 are configured that the vial 40 is securely held by the holding means 20,30 by the time the loader means 70 reaches the forward limit of its movement, such that the relative motion in the conveying direction between the holding means 20,30 and the loader means 70 carries the vial 40 and carrier 50 out of the grip of the fork jaws 71 as shown in Fig. 7C. The fork 71 can simultaneously or subsequently move back in the direction opposite the conveying direction ready to receive another vial 40. Whilst this is happening the next row of empty holding means 20,30 are moving upward toward their vertical orientation to receive this new vial and carrier 50, and the movement of the loader means 70 into its retracted position moves the loader means 70 out of the path of the next row 20A,30A of holding means, rising as the wheel 63 rotates. Suitable means, e.g. a robot handling means, by which the loader means can be loaded with a new vial 40 and carrier 50 will be apparent to those skilled in the art. For example plural vials 40 and carriers 50 can be provided in a row transverse to the conveying direction, and corresponding to the spacing of the plural fork jaws 71 of the loading means 70, and can be moved into the path of the loading means 70 as it moves in the conveying direction so that each vial 40 intercepts the path of a fork 71 and is caught by the fork 71.

The conveyor system of Fig. 8 operates analogously, but in Fig. 8 the processing stations 80, 81 are shown provided with aerodynamic shrouds as described in more detail below.

In the course of their movement in the conveying direction the vials 40 are subjected to one or more process, such as filling, closing, sealing etc. applied by one or more processing stations 80, 81.

After the processes to be applied at stations 80, 81 to the vials 40 have been completed, the vials may be unloaded from the conveyor system by unloader means 90 positioned at a downstream end of the conveyor system. The unloader means may be a mechanism essentially a similar but opposite construction to the loader means 70. That is, vials 40 and carriers 50 may be carried by holding means 20,30, and the unloader means 90 may have fork jaws 91 similar to those 71 but with their bite facing opposite to the conveying direction positioned to receive vials carried by the holding means 20,30 whilst the vials 40 and carriers 40 are securely held by the holding means 20,30. The downstream end of the conveyor 60 may be constructed so that when vials 40 are caught in this way by such fork jaws 91 of the unloading means 90 and securely held thereby, the grip part 30 is moved into its upper position to release the vial 40 and carrier 50. The vials 40 and carriers 50 may then be carried by the jaws 91 of the unloader means 90 away from the vicinity of the conveyor 60 by a horizontal movement of the unloader means 90. Suitably the vials 40 are received by the unloader means 90 and removed from the holding means 20,30whilst the vials 40 are still moving horizontally and before the holding means 20,30 have begun their descent at the downstream end of the conveyor 60.

Thereafter vials held by the unloading means 90 may be delivered to a suitable receiving means, e.g. delivered to another conveyor (not shown) or to defined locations etc.

To maintain sterility of the vials 40 during their conveying along the conveyor 60 and the performance of the processes at stations 80, 81 a laminar flow 100 of purified air may be directed downwardly. It is seen in Fig. 6 that the vials 40 are held by their carriers 50 such that the vials are held adjacent their bottom 44 so that there is reduced risk of upward rebound of the airflow toward the upper part or closure 41 of the vials 40.

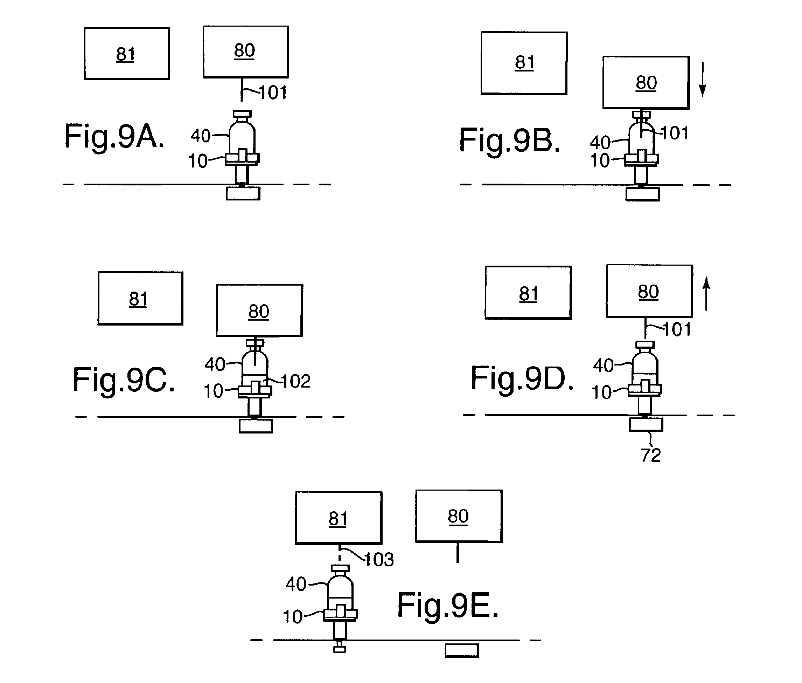

Figs. 9A-E shows the sequence of operations as a vial 40 passes processing stations 80 and 81. As the vial 40 passes underneath station 80 as seen in Fig. 9A, the processing station 80 descends so that filling needle 101 punctures and pass through the puncturable closure 41 of the vial 40. As seen in Fig. 9B a liquid medicament 102 is injected through the needle 101 into the vial 40, air being vented around the sides of the needle 101 or via a vent groove in the outer surface of the needle 101. As seen in Fig. 9D the station 80 then rises, withdrawing the needle 101 but leaving a residual puncture hole (not shown) in closure 41. The vial 40 is then moved to be underneath station 81 at which the residual puncture hole is heat sealed using a focused laser beam 103 to melt the material of the closure adjacent to the residual puncture hole.

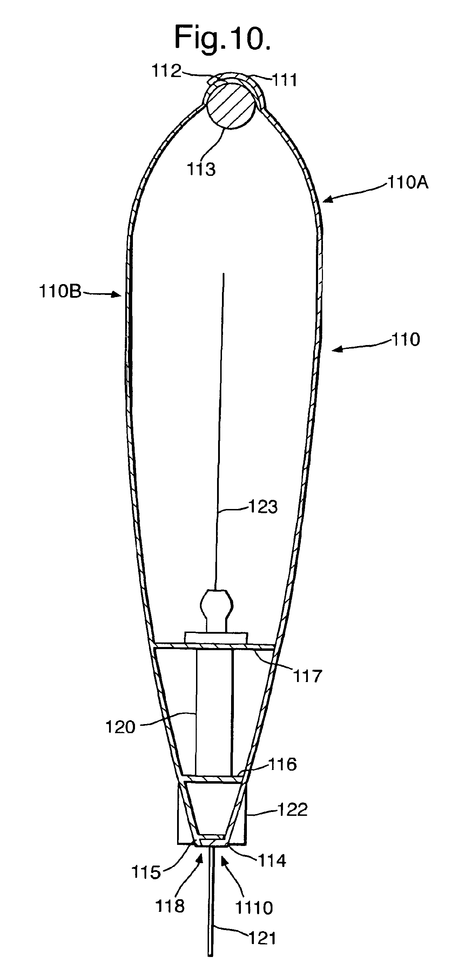

Referring to Figs 10-15, the following parts are identified:
110 shroud
110A, 110B part shrouds
111,112 leading edges
113 support rail
114, 115 overlapping parts
116, 117 supports for a vial filling apparatus
116A, 116B indentations
118 aperture
119 interior of the shroud
1110 trailing edge
120 vial filling apparatus
121 hollow filling needle
122 luer connector
123 flow conduit
130 conveyor line
140 vials
141 puncturable closure
142 residual puncture hole
150 supports

Referring to Fig. 10 a shroud 110 is shown in cross section, comprising part of a processing station for filling plural vials (not shown). For processing the vials are arranged in a straight line row, the linear direction of which is perpendicular to the drawing, the cross section of the shroud 110 shown consequently being across this linear direction. In cross section the external shape of the shroud 110 is generally of a symmetrical pear shape having a longitudinal up-down direction, widest at the upper end.

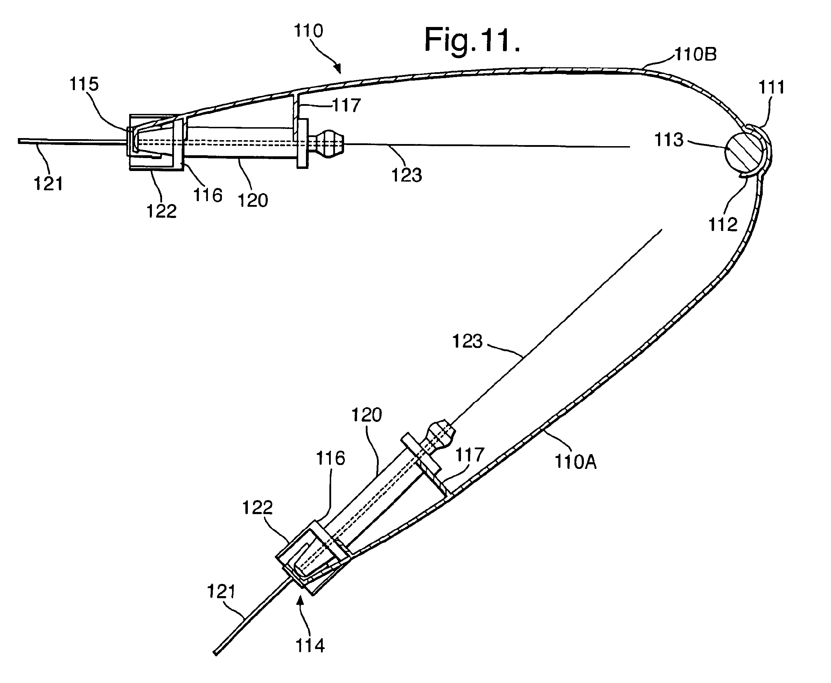

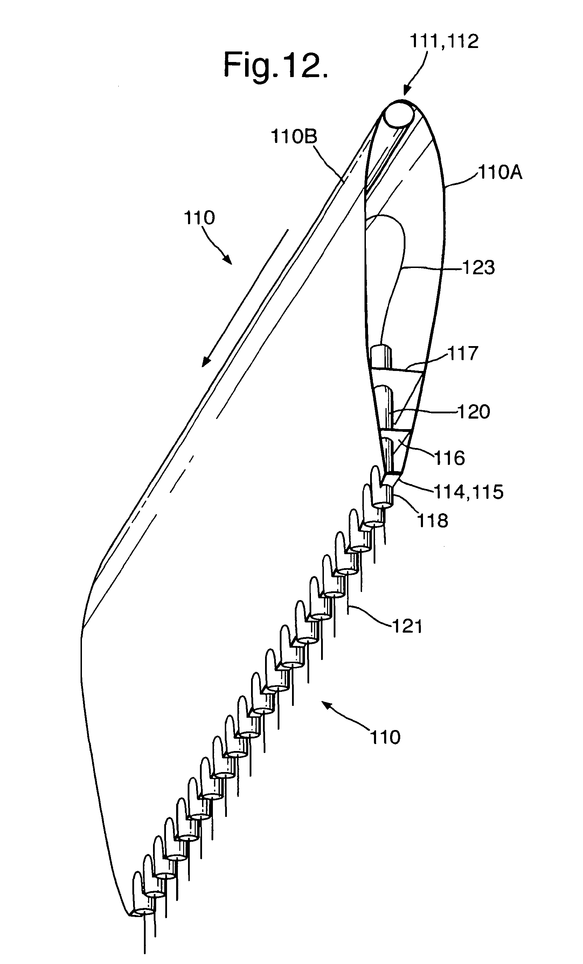

As seen more clearly in Fig. 12 the shroud 110 is elongate in a direction indicated by the arrow in Fig. 12, the section seen in Figs. 10 and 11 being cut across this elongate direction.

The shroud 110 comprises two part-shrouds 110A, 110B which are hinged by their respective leading edges 111, 112 being made in a part-hollow cylindrical shape, the internal diameter of the leading edge of the first part shell 110A corresponding closely to the external diameter of the leading edge of the second 110B, so that the part-cylindrical shapes can overlap and smoothly rotate relative to each other in a smooth hinging fit. Internally there is a cylindrical sectioned support rail 113 extending in the linear direction and over which the cylindrical section 112 conformingly fits.

At their lower ends the two part shrouds 110A, 110B have respective overlapping parts 114, 115 which meet and interlock by a friction fit to form a lower edge of the shroud 110. The overlapping parts 114, 115 may also be connected together by fastening means (not shown).

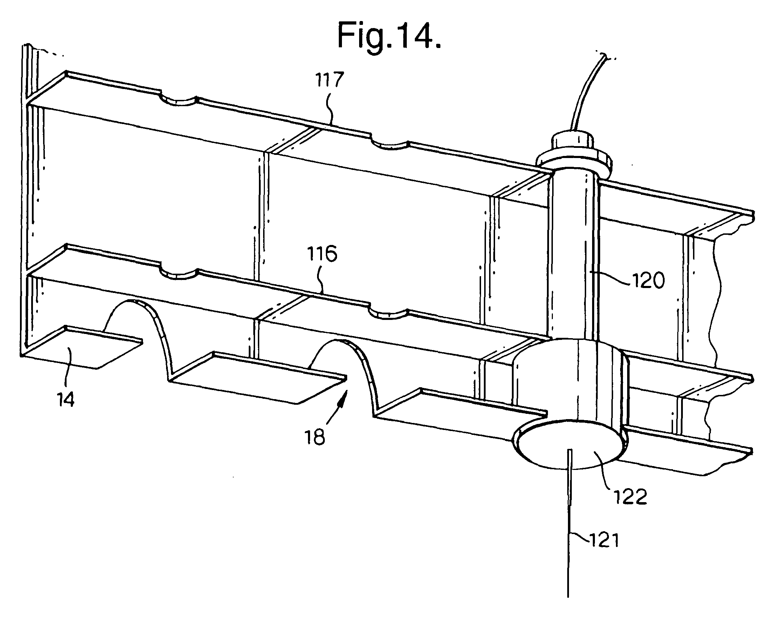

Internally each part-shroud 110A, 110B is provided on an inner surface with supports 116, 117 for a vial filling apparatus 120. As is seen more clearly in Fig. 14 each support 116, 117 comprises a shelf having indentations 116A, 117A to receive a part of the apparatus 120, which as shown is of an overall stepped cylindrical shape. Also, as shown, the bottom edge of each part shroud 110A, 110B has an appropriately shaped aperture 118 therein to receive the apparatus 120. The apparatus 120 comprises a hollow filling needle 121 at the lower end of a luer connector 122 which enables the filling needle 121 to be connected to a flow conduit 123 which is enclosed within the interior 119 of the shroud 110. The needle 121 of the apparatus 120 projects through and beyond the trailing edge 1110 of shroud 110.

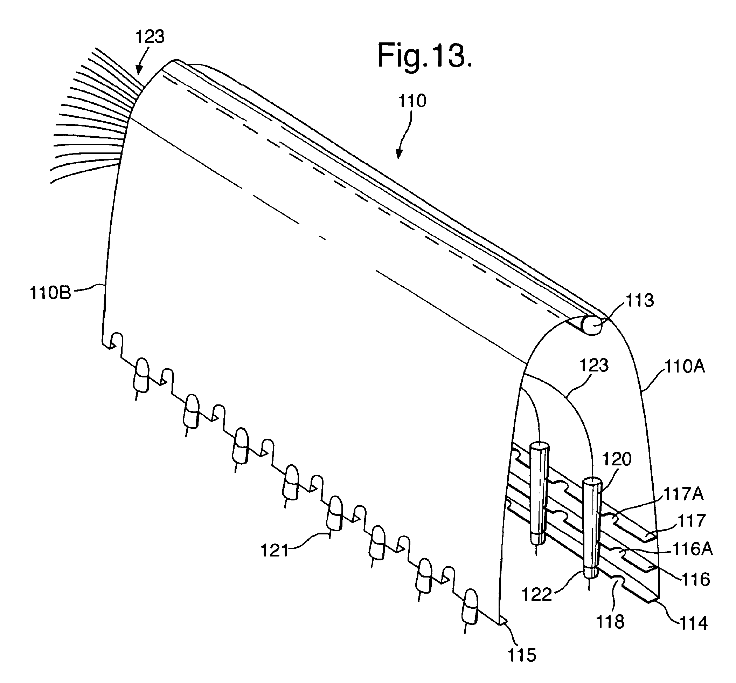

Fig. 12 shows how plural apparatus units 120 are held and enclosed by shroud 110. In each part shroud 110A, 110B the units of apparatus 120 are supported in alternate indentations 116, 117 and in the pre-closed assembly shown in Fig. 13 the units 120 in respective part shrouds 110A,110B are supported longitudinally staggered.

Figs. 11 and 13 shows how the two part shrouds 110A, 110B can open about the axis of the hinge 111, 112, 113 to allow access to the interior of the shroud 110. Two processing apparatus units 120 are shown in Fig. 11 held by respective supports 116, 117 on respective opposite facing inner surfaces of the part shrouds 110A, 110B. On the opposite facing inner surfaces the units 120 are held in a staggered arrangement as seen more clearly in Fig. 13, facilitating access to the interior of each part shroud 110A, 110B.

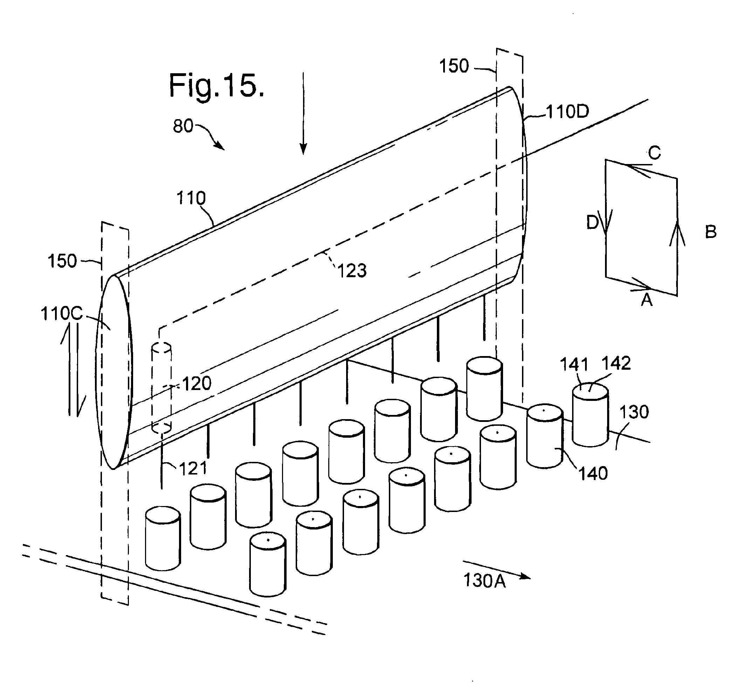

Fig. 15 shows the processing station 80, which may be a processing station 80 as described with reference to Figs 7, 8 and 9 above, with its shroud 110 and its associated units 120 (one only shown, hatched) in use. The two part shrouds 110A,110B together with their associated units 120 and preferably all other components to be enclosed within the shroud may be sterilised by autoclaving before the shroud is closed, to give an assurance of sterility. The shroud 110 is located above a conveyor line 130, which may be a conveyor line 60 as described above, transporting empty vials 140 (shown schematically). Each vial 140 is closed at its upwardly facing mouth by a puncturable closure 141. The conveyor line 130 is transporting the vials 140 in a conveyor direction shown by arrow 130A, and on the conveyor 130 plural vials 140 are arranged in holders (not shown) on the conveyor 130 in a row extending perpendicularly across the conveyor line 130, with the upper surface of their puncturable closures 41 facing upwards. A downward laminar flow of purified air is directed over the shroud 110 and conveyor 130 as indicated by the bold arrow.

In Fig. 15 each unit 120 is positioned directly above the closure 141 of a corresponding vial 140 beneath. The relative velocity of each unit 120 and vial 140 in the conveying direction is temporarily zero, which may be achieved by means known in the art. For example the conveyor 130 may be temporarily stopped, or alternatively the shroud 110 may be moved about a path shown schematically A-B-C-D over length A along which the shroud 110 and vials 140 have the same velocity and hence zero relative velocity. The supports 150 may incorporate suitable mechanisms to achieve such "walking" motion.

The shroud 110 is supported at its ends 110C, 110D on opposite sides of the conveyor line 130 on supports shown schematically 150, and is moveable up and down thereon by a drive means (not shown) of conventional construction and operation. With the conveyor line 130 and the shroud 110 temporarily at zero relative velocity the shroud 110 and its associated units 120 is moved downwards, e.g. along length 150D, so that needles 121 puncture the closures 141 of each of the vials 140. Adjacent one longitudinal end of the shroud 110 are located control equipment (not shown), and reservoirs of medicament and metering pumps for the medicament, (not shown) to which the flow conduits 123 to ensure that the shroud 110 and vials 140 are in an appropriate configuration for the filling operation to be carried out, and to meter an appropriate quantity of medicament into each vial 140. The vials 140 may then be filled with a suitable amount of a medicament via flow conduits 123, and the needles 121 may then be withdrawn by an upward movement of the shroud, e.g. along length 150B, from their respective vials 120, leaving only a small residual puncture hole 142 in closure 141. The inherent resilience of the elastomeric material of the closures 141 tends to keep the interior of the vial 140 sealed against contamination, but the closures 141 are then sealed using a further processing station comprising a sealing station (e.g. a station 81 as described with reference to Figs 7, 8, 9 above) which will be described below. The flow conduits 123 are connected to metering pumps (not shown) and reservoirs (not shown) for the liquid medicament, and preferably the construction is such that the length of each flow conduit 123 between the unit 120 and the pump is the same, to facilitate a uniform flow of the medicament.

Prior to the filling operation all of the components 110, 120, 130, 140, 150 have been thoroughly sterilised and during the filling operation the entire assembly of shroud 110 and its units 120, conveyor 130, vials 140 and supports 150 are maintained in a sterile enclosure (not shown) and under a downward flow of sterile air in the direction of the arrows. The smooth, aerodynamic profile of the outer surface of the shroud 110 ensures a smooth undisturbed flow of the sterilised air downwards, and the absence of recesses, corners etc therein inhibits the accumulation of any contaminating microorganisms.

After the above-described filling operation the conveyor 130 transports the vials 140 to a sealing station, e.g. a station 81 as described with reference to Figs 7, 8, 9 above. The sealing station comprises an aerodynamic shroud of generally similar construction to that shown in Figs. 10-15. Internally the shroud supports plural light guides each of which is connected to a fibre optic light guide for the direction of laser light from a suitable laser (not shown) e.g. a commercially available laser typically operating at a wavelength of 980nm, at a laser power of up to ca. 20W. Powers of up to ca. 4 - 10W, e.g. ca. 8.0+/- 0.5W have been found suitable.

Each light guide 163 is mounted in the lower edge so as to project through an aperture to enable a beam of laser light to be directed therefrom at the closure 141 of a vial 140. Also mounted in the aperture in the lower edge is a thermal sensor in number corresponding to the light guides, and each directed at the region of a vial closure 141 at which the laser light is directed, and connected via cables to control equipment (not shown) to monitor that the upper surface of each vial closure 141 reaches a temperature such that the region fuses to seal the residual puncture hole. Also mounted in the lower edge are exhaust manifolds connected to main manifold running in the elongate (see Fig. 12) direction along the interior of shroud via which any fumes emitted from a closure 141 as it is heated by the laser light can be removed.

As with the filling station described above a flow of sterile air may be directed downwardly over the shroud, the surface of which causes minimal disruption of the flow of air.

The shroud may be in the form of two part-shrouds hinged at its upper edge (not shown) in a similar manner to the shroud shown in Figs. 10-15. At the lower edge the respective lower edges of the part shrouds may meet and/or overlap in a manner as described for the shroud 110 shown in Figs. 10-15 along a line between the lower exposed surfaces of the light guides and thermal sensors. By such a construction supports (not shown) may be provided for the light guides and thermal sensors in each part shroud in a manner analogous to the supports in the shroud 110 shown in Figs. 10-15.

The sealing operation is carried out analogously to the above-described filling operation, i.e. the station and vials 140 are temporarily set at zero relative velocity, and with the station moved downwardly laser light can be directed at the residual puncture hole in the vial closure to thereby seal the hole. The thermal sensor monitors the temperature at the site of the puncture hole 142 to confirm that a suitable temperature has been reached to seal the closure 141, and any fumes may be extracted via the manifold. Control equipment (not shown) can be used to ensure that the station and vials 140 are in an appropriate configuration to perform this operation.

## Claims

1. A processing station for performing an operation on an article in a flow of purified air, which comprises; a processing apparatus (120) for performing the operation upon the article, an aerodynamic shroud (110) around at least part of the apparatus (120), **characterised in that** said flow of purified air is a laminar upstream to downstream direction flow and said aerodynamic shroud (110) is positioned such that a leading surface of the aerodynamic shroud is upstream of the apparatus (120).

2. A processing station according to claim 1 **characterised by** incorporating a hollow filling needle (121) configured to perform a vial-filling process in which an article being a vial (140) with a closure (141) made of a heat- fusible puncturable material is conveyed by the conveyor (130) to a position adjacent the processing station, and the processing station punctures the vial closure (141) by passing the hollow filling needle (121) through the closure (141), introduces a material into the vial (141) via the needle (121), and withdraws the needle (121).

3. A processing station according to claim 1 or 2 **characterised by** incorporating a source of heat (103) to perform a process in which a puncture hole in a closure for an article and made of a heat- fusible puncturable material is sealed using the source of heat.

4. A processing station according to claim 1, 2 or 3 **characterised by** being mounted adjacent a conveyor system which is downstream of the processing station relative to the airflow and adapted to transport articles to a position adjacent the processing station.

5. A processing station according to any one of claims 1 to 4 **characterised in that** the shroud (110) comprises two part-shrouds (110A, 110B), elongated in a direction perpendicular to the direction of the laminar flow and to the plane of the cross section, hinged together at their respective leading edges (111, 112) to rotate about a hinge axis parallel to the elongate direction.

6. A conveyor system (130) suitable to convey articles being vials (140) thereon, a means to provide a laminar flow of air, a processing apparatus for performing the operation upon the article, an aerodynamic shroud (110) around at least part of the apparatus **characterised in that** said means to provide a laminar flow furthermore provide said flow of air in an upstream toward downstream direction toward the conveyor (130), and **in that** said aerodynamic shroud (110) is positioned such that a leading surface of the aerodynamic shroud (110) is upstream of the apparatus, the processing apparatus (120) being upstream of the conveyor (130) in the laminar flow of air.

7. A conveyor system according to claim 6 **characterised by** a processing station (120) capable of movement only in the up-down direction relative to the conveyor (130), and the conveyor being capable of being temporarily and/or locally stopped during the operation of the processing station.

8. A conveyor system according to claim 6 **characterised in that** the processing station (120) is movable about a path and at a speed such that on part of the path the processing station moves in parallel with articles on the conveyor (130) in the conveying direction and at the same speed, so that there is zero relative velocity between the station and the article(s).

9. A process comprising puncturing a closure (141) of a vial (140) made of a heat- fusible puncturable material by passing a hollow filling needle (121) through the heat-fusible closure, introducing a material into the vial (140) via the needle (121), then withdrawing the needle, **characterized in that** the needle (121) comprises part of a processing station as claimed in any one of claims 1 to 5.

10. A process comprising sealing a puncture hole in a thermoplastic closure of a vial using a source of heat (103), **characterized in that** the source of heat comprises part of a processing station as claimed in any one of claims 1 to 5.

## Patentansprüche

1. Eine Bearbeitungsstation zur Behandlung eines Artikels in einem Reinluftstrom, welche Folgendes umfasst: einen Bearbeitungsapparat (120) zur Ausführung der Behandlung des Artikels, eine aerodynamische Ummantelung (110) rund um zumindest einen Teil des Apparats (120), **dadurch gekennzeichnet, dass** der erwähnte Reinluftstrom ein laminarer, stromaufwärts nach stromabwärts ausgerichteter Strom ist und dass die erwähnte aerodynamische Ummantelung (110) so positioniert ist, dass eine Anströmfläche der aerodynamischen Ummantelung stromaufwärts vom Apparat (120) ist.

2. Eine Bearbeitungsstation nach Anspruch 1, **dadurch gekennzeichnet, dass** eine hohle Füllnadel (121) darin integriert ist, welche ausgelegt ist, um eine Befüllung eines Fläschchens vorzunehmen, wobei ein Artikel, und zwar ein Fläschchen (140) mit einem Verschluss (141) bestehend aus einem wärmeschmelzbaren, durchstechbaren Material, durch das Förderband (130) in eine Position neben der Bearbeitungsstation befördert wird, und die Bearbeitungsstation den Fläschchenverschluss (141) durchsticht, indem die hohle Füllnadel (121) durch den Verschluss (141) geführt wird, über die Nadel (121) ein Material in das Fläschchen (140) einbringt und die Nadel (121) wieder herauszieht.

3. Eine Bearbeitungsstation nach Anspruch 1 oder 2, **dadurch gekennzeichnet, dass** eine Wärmequelle (103) integriert ist, um ein Verfahren auszuführen, in dem ein Einstichloch in einem Verschluss für einen Artikel, welcher aus einem wärmeschmelzbaren, durchstechbaren Material besteht, mittels der Wärmequelle versiegelt wird.

4. Eine Bearbeitungsstation nach Anspruch 1, 2 oder 3, **dadurch gekennzeichnet, dass** sie neben einem Beförderungssystem montiert ist, welches sich stromabwärts von der Bearbeitungsstation in Bezug zum Luftstrom befindet und ausgelegt ist, um Artikel in eine Position neben der Bearbeitungsstation zu befördern.

5. Eine Bearbeitungsstation nach irgendeinem der Ansprüche 1 bis 4, **dadurch gekennzeichnet, dass** die Ummantelung (110) zwei Teil-Ummantelungen (110A, 110B) umfasst, ausgestreckt in eine Richtung senkrecht zur Richtung des laminaren Stroms und zur Ebene des Querschnitts, gelenkig miteinander an ihren jeweiligen Anströmkanten (111, 112) verbunden, um um eine Scharnierachse parallel zur Längsrichtung zu rotieren.

6. Ein Beförderungssystem (130) geeignet zur Beförderung von Artikeln, und zwar Fläschchen (140), darauf, ein Mittel zur Anlieferung eines laminaren Luftstroms, ein Bearbeitungsapparat zur Ausführung der Behandlung des Artikels, eine aerodynamische Ummantelung (110) rund um zumindest einen Teil des Apparats, **dadurch gekennzeichnet, dass** das erwähnte Mittel zur Anlieferung eines laminaren Luftstroms ferner den erwähnten Luftstrom in einer in Bezug zum Förderband (130) stromaufwärts nach stromabwärts ausgerichteten Richtung liefert, und dass die erwähnte aerodynamische Ummantelung (110) so positioniert ist, dass eine Anströmfläche der aerodynamischen Ummantelung (110) stromaufwärts vom Apparat ist, wobei der Bearbeitungsapparat (120) stromaufwärts vom Förderband (130) im laminaren Luftstrom ist.

7. Ein Beförderungssystem nach Anspruch 6, **gekennzeichnet durch** eine Bearbeitungsstation (120), die sich nur in die Auf-Ab-Richtung in Bezug zum Förderband (130) bewegen kann, und **dadurch**, dass das Förderband während des Betriebs der Bearbeitungsstation zeitlich und/oder örtlich gestoppt werden kann.

8. Ein Beförderungssystem nach Anspruch 6, **dadurch gekennzeichnet, dass** eine Bearbeitungsstation (120) entlang eines Weges und in einer Geschwindigkeit bewegt werden kann, sodass die Bearbeitungsstation sich auf einem Teil des Weges parallel zu den Artikeln auf dem Förderband (130) in die Transportrichtung und mit der gleichen Geschwindigkeit bewegt, sodass es zwischen der Station und dem Artikel bzw. den Artikeln eine relative Geschwindigkeit gleich null gibt.

9. Ein Verfahren, welches das Durchstechen eines Verschlusses (141) eines Fläschchens (140), bestehend aus einem wärmeschmelzbaren, durchstechbaren Material, durch Einführen einer hohlen Füllnadel (121) durch den wärmeschmelzbaren Verschluss, das Einbringen eines Materials in das Fläschchen (140) durch die Nadel (121), danach das Herausziehen der Nadel umfasst, **dadurch gekennzeichnet, dass** die Nadel (121) einen Teil einer Bearbeitungsstation, wie beansprucht in irgendeinem der Ansprüche 1 bis 5, umfasst.

10. Ein Verfahren, welches das Versiegeln eines Einstichloches in einem thermoplastischen Verschluss eines Fläschchens unter Verwendung einer Wärmequelle (103) umfasst, **dadurch gekennzeichnet, dass** die Wärmequelle einen Teil einer Bearbeitungsstation, wie beansprucht in irgendeinem der Ansprüche 1 bis 5, umfasst.

## Revendications

1. Poste de traitement pour effectuer une opération sur un article dans un flux d'air purifié, qui comprend : un appareil de traitement (120) pour effectuer l'opération sur l'article, une enveloppe aérodynamique (110) autour d'au moins une partie de l'appareil (120), **caractérisé en ce que** ledit flux d'air purifié est un flux laminaire dirigé de l'amont vers l'aval et ladite enveloppe aérodynamique (110) est positionnée de telle manière qu'une surface d'attaque de l'enveloppe aérodynamique est en amont de l'appareil (120).

2. Poste de traitement selon la revendication 1 **caractérisé par** l'incorporation d'une aiguille de remplissage creuse (121) configurée pour effectuer un processus de remplissage de fiole dans lequel un article qui est une fiole (140) avec un capuchon (141) réalisé dans un matériau thermofusible perforable est convoyé par un convoyeur (130) jusqu'à une position adjacente au poste de traitement, et le poste de traitement perfore le capuchon (141) de la fiole en faisant passant l'aiguille de remplissage creuse (121) à travers le capuchon (141), introduit un matériau dans la fiole (141) par l'intermédiaire de l'aiguille (121) et retire l'aiguille (121).

3. Poste de traitement selon la revendication 1 ou 2 **caractérisé par** l'incorporation d'une source de chaleur (103) pour effectuer un processus dans lequel un trou perforé dans un capuchon pour un article et réalisé dans un matériau thermofusible perforable est scellé en utilisant la source de chaleur.

4. Poste de traitement selon la revendication 1, 2 ou 3 **caractérisé par** son montage adjacent à un système de convoyeur qui est en aval du poste de traitement par rapport au flux d'air et adapté pour transporter des articles jusqu'à une position adjacente au poste de traitement.

5. Poste de traitement selon l'une quelconque des revendications 1 à 4 **caractérisé en ce que** l'enveloppe (110) comprend deux sous-enveloppes (110A, 110B), allongées dans une direction perpendiculaire à la direction du flux laminaire et au plan de la section transversale, articulées ensemble à leurs bords d'attaque (111, 112) respectifs pour tourner autour d'un axe d'articulation parallèle à leur direction allongée.

6. Système de convoyeur (130) approprié pour convoyer des articles qui sont des fioles (140), un moyen pour fournir un flux laminaire d'air, un appareil de traitement pour effectuer l'opération sur l'article, une enveloppe aérodynamique (110) autour d'au moins une partie de l'appareil, **caractérisé en ce que** ledit moyen pour fournir un flux laminaire fournit en outre ledit flux d'air dans une direction d'amont en aval en direction du convoyeur (130), et **en ce que** ladite enveloppe aérodynamique (110) est positionnée de telle manière qu'une surface d'attaque de l'enveloppe aérodynamique (110) soit en amont de l'appareil, l'appareil de traitement (120) étant en amont du convoyeur (130) dans le flux laminaire d'air.

7. Système de convoyeur selon la revendication 6 **caractérisé par** un poste de traitement (120) capable de mouvement uniquement dans la direction haut-bas par rapport au convoyeur (130), et la capacité du convoyeur d'être temporairement et/ou localement stoppé pendant le fonctionnement du poste de traitement.

8. Système de convoyeur selon la revendication 6 **caractérisé en ce que** le poste de traitement (120) est mobile le long d'un chemin et à une vitesse telle que sur une partie du chemin, le poste de traitement se déplace parallèlement aux articles sur le convoyeur (130) dans la direction de convoyage et à la même vitesse de sorte qu'il n'y aucune vitesse relative entre le poste et l'article (les articles).

9. Procédé comprenant la perforation d'un capuchon (141) d'une fiole (140) réalisé dans un matériau thermofusible perforable en faisant passer une aiguille de remplissage creuse (121) à travers le capuchon thermofusible, en introduisant un matériau dans la fiole (140) par l'intermédiaire de l'aiguille (121), puis en retirant l'aiguille, **caractérisé en ce que** l'aiguille (121) constitue une partie d'un poste de traitement tel que revendiqué dans l'une quelconque des revendications 1 à 5.

10. Procédé comprenant le scellement d'un trou perforé dans un capuchon thermoplastique d'une fiole en utilisant une source de chaleur (103), **caractérisé en ce que** la source de chaleur constitue une partie d'un poste de traitement tel que revendiqué dans l'une quelconque des revendications 1 à 5.
